# EUROPÄISCHE PATENTANMELDUNG

(11) **EP 2 653 848 A1**
(43) Veröffentlichungstag der Anmeldung: **23.10.2013**
(21) Anmeldenummer: 13164342.1
(22) Anmeldetag: 18.04.2013
(51) Int. Cl.: G01M 13/04, F16C 19/00

(54) **Vorrichtung zur Messung der Lagerluft eines Wälzlagers**

(30) Priorität: 18.04.2012 DE 102012206377
(71) Anmelder: Aktiebolaget SKF, 41550 Göteborg (SE)
(72) Erfinder: Meinlschmidt, Helmut, 97502 Euerbach (DE); Schlereth, Armin, 97422 Schweinfurt (DE); Schmiechen, Rolf, 97525 Schwebheim (DE); Sterker, Johannes, 97711 Maßbach-Poppenlauer (DE)
(74) Vertreter: Schonecke, Mitja

(57) **Zusammenfassung**

Die Erfindung betrifft eine Vorrichtung (1) zur Messung der axialen Lagerluft eines mit einem Rad (2) verbundenen Radlagers (3), wobei das Radlager (3) einen Innenring (4) aufweist, der mit einem Wellenabschnitt (5) des Rades (2) verbunden ist, wobei das Radlager (3) einen Außenring (6) aufweist und wobei der Innenring (4) und der Außenring (6) konzentrisch zu einer Achse (A) angeordnet sind. Um insbesondere Eisenbahn-Radlager bei geringem Demontageaufwand auf ihre Funktion prüfen zu können, umfasst die Vorrichtung erfindungsgemäß: einen Grundrahmen (7), Befestigungsmittel (8) zur Fixierung des Grundrahmens (7) an dem Rad (2), ein Haltelement (9), das ausgebildet ist, direkt oder indirekt am Außenring (6) befestigt zu werden, Krafterzeugungsmittel (10) mit einem Aktuator (11), die an dem Grundrahmen (7) angeordnet und ausgebildet sind, den Aktuator (10) mit einer Andruckkraft (F) in Richtung der Achse (A) auf das Haltemittel (9) wirken zu lassen, und Messmittel (12), die direkt oder indirekt am Grundrahmen (7) angeordnet und ausgebildet sind, eine Verschiebung des Halteelements (9) relativ zum Grundrahmen (7) in Achsrichtung (A) zu messen.

## Beschreibung

Die Erfindung betrifft eine Vorrichtung zur Messung der axialen Lagerluft eines mit einem Rad verbundenen Radlagers, wobei das Radlager einen Innenring aufweist, der mit einem Wellenabschnitt des Rades verbunden ist, wobei das Radlager einen Außenring aufweist und wobei der Innenring und der Außenring konzentrisch zu einer Achse angeordnet sind.

Räder, insbesondere solche, die in Eisenbahnen zur Anwendung kommen, weisen einen Wellenabschnitt (Lagerzapfen) auf, der auf einem Innenring eines Radlagers montiert ist. Der Außenring des Radlagers ist im Betrieb in einem Gehäuse montiert. Dabei besteht die Anforderung, dass das Lager eine hohe Zuverlässigkeit aufweisen muss. Demgemäß ist es Vorschrift, das Lager in definierten Intervallen auf seine Funktionsfähigkeit zu überprüfen, um rechtzeitig zu erkennen, wann das Ende der Lager-Gebrauchsdauer naht.

Zur Beurteilung von Radsatzlagern, insbesondere bei Eisenbahnlagern, müssen diese daher in Intervallen von der Welle demontiert werden. In Aufbereitungswerkstätten werden die Lagerluft gemessen und ggf. Schwingungsanalysen durchgeführt. Die Messergebnisse dienen als Entscheidungshilfe, ob ein Lager wieder verbaut werden kann oder überholt bzw. verschrottet werden muss.

Der für besagte Untersuchung zu treibende Aufwand ist entsprechend groß. Insbesondere ist eine Demontage des Lagers vom Rad bzw. seinem Wellenabschnitt erforderlich, um das Lager in an sich bekannter Weise untersuchen zu können, wobei einerseits der Vorspannzustand relevant ist, also die vorhandene insbesondere axiale Lagerluft, und andererseits das Schwingungsverhalten des Lagers, aufgrund dessen auf den Zustand des Lagers geschlossen werden kann.

Der Erfindung liegt die **Aufgabe** zugrunde, eine Vorrichtung der eingangs genannten Art so fortzubilden, dass es in einfacherer Weise möglich ist, ein Radlager, insbesondere ein Eisenbahn-Radlager, mit geringerem Aufwand und insbesondere bei geringem Demontageaufwand auf seine Funktion prüfen zu können.

Die L**ösung** dieser Aufgabe durch die Erfindung ist dadurch gekennzeichnet, dass die Vorrichtung zur Messung der axialen Lagerluft folgendes umfasst:
- einen Grundrahmen,
- Befestigungsmittel zur Fixierung des Grundrahmens an dem Rad,
- ein Haltelement, das ausgebildet ist, direkt oder indirekt am Außenring befestigt zu werden,
- Krafterzeugungsmittel mit einem Aktuator, die an dem Grundrahmen angeordnet und ausgebildet sind, den Aktuator mit einer Andruckkraft in Richtung der Achse auf das Haltemittel wirken zu lassen, und
- Messmittel, die direkt oder indirekt am Grundrahmen angeordnet und ausgebildet sind, eine Verschiebung des Halteelements relativ zum Grundrahmen in Richtung der Achse zu messen.

Das Halteelement ist gemäß einer bevorzugten Ausführungsform der Erfindung glockenförmig ausgebildet, um den Außenring des Radlagers an seinem Außenumfang einzufassen.

Am Grundrahmen können weiterhin Antriebsmittel angeordnet sein, mit denen das Halteelement um die Achse drehangetrieben werden kann. Die Antriebsmittel können einen Elektromotor umfassen, der über ein Treibelement mit dem Halteelement in Verbindung steht. Das Treibelement ist bevorzugt ein Riemen, insbesondere ein Flachriemen oder ein Keilriemen, oder eine Kette.

Das Haltelement kann einen ersten Teil aufweisen, der drehfest mit dem Außenring verbindbar ist, und einen zweiten Teil aufweisen, der mit dem Krafterzeugungsmittel verbindbar ist, wobei beide Teile über eine Lageranordnung relativ zueinander um die Achse drehbar angeordnet sind.

Die Krafterzeugungsmittel können weitgehend rotationssymmetrisch zur Achse ausgebildet sein. Zumindest ein Teil der Messmittel kann konzentrisch zu den Krafterzeugungsmitteln angeordnet sein. Der konzentrisch zu den Krafterzeugungsmitteln angeordnete Teil des Messmittels kann ein Stift sein. Es kann alternativ aber auch ein berührungsloses Messmittel (Wegsensor) eingesetzt werden.

Am Grundrahmen sind besonders bevorzugt weiterhin Sensormittel angeordnet, mit denen vom Radlager erzeugte Schwingungen detektiert werden können. Damit kann eine Schwingungsanalyse durchgeführt werden.

Der genannte Aktuator kann dabei so ausgebildet sein, dass er eine Kraft in beide Achsrichtungen auf das Halteelement bzw. eine mit diesem verbundene Klemme ausüben kann, so dass abwechselnd in beiden Achsrichtungen eine Kraft erzeugt werden kann.

Die Erfindung nutzt die an sich bekannte Axialluftmessmethode bei Wälzlagern, bei der eine Lagerung mit einer Mess-Last beaufschlagt wird und dabei ein Wegaufnehmer so positioniert wird, dass die sich aufgrund der Mess-Last ergebende axiale Verschiebung gemessen werden kann. Nach dem Wechsel der Lastrichtung wird die sich ergebende axiale Verschiebung am Wegaufnehmer abgelesen und so auf die sich im Lager befindliche axiale Lagerluft geschlossen.

Mit der vorgeschlagenen Anordnung kann ein mobiles Überwachen der Arbeitsbedingungen des Radlagers (Condition Monitoring) mit geringem Aufwand erfolgen, was sich insbesondere bei Eisenbahn-Radsatzlagerungen nutzen lässt, die ansonsten nur mit sehr viel größerem Aufwand untersucht werden können.

Die kombinierte Messung der axialen Lagerluft und eine Schwingungsanalyse des Lagers werden in einfacher Weise möglich. Die vorgeschlagene Vorrichtung ermöglicht demgemäß sowohl eine Axialluftmessung des Lagers bzw. eine Messung der Lageranstellung als auch eine Schwingungsanalyse dank der zusätzlich in die Vorrichtung integrierten Sensormittel für die Schwingungsanalyse. Demgemäß kann in einfacher Weise der Istzustand eines Radsatzlagers ohne Demontage der Welle ermittelt und das Lager beurteilt werden.

Das vorgeschlagene Messsystem ist mobil und kann ohne großen Aufwand transportiert werden.

Der Lagerzustand kann im montierten Zustand beurteilt werden, wodurch unnötige Demontagen und Montagen vermieden werden können. Zusätzlich können Einflüsse, die durch den Montagezustand verursacht sind, entdeckt werden (u. a. z. B. lose Deckelschrauben und Setzvorgänge).

Als Messwerte werden Axialluft, gegebenenfalls die axiale Vorspannung und gegebenenfalls Schwingungen ermittelt, die in an sich bekannter Weise analysiert werden können, um eine Beurteilung des Radlagers vornehmen zu können.

In der Zeichnung ist ein Ausführungsbeispiel der Erfindung dargestellt. Es zeigen:
- Fig. 1: in einem teilweisen Radialschnitt ein Eisenbahnrad samt Radlager, wobei eine Vorrichtung zur Messung der axialen Lagerluft am Rad und Radlager angebracht ist, und
- Fig. 2: einen Ausschnitt aus Fig. 1.

In den Figuren ist ein Rad 2 eines Eisenbahn-Radsatzes dargestellt, das einen Wellenabschnitt 5 aufweist. Dieser Wellenabschnitt 5 ist mit einem Radlager 3 verbunden. Das Radlager 3 ist als zweireihiges Kegelrollenlager ausgeführt und weist zwei Innenringe 4 und einen Außenring 6 auf. Ohne das Radlager vom Wellenabschnitt 5 demontieren zu müssen, soll das Radlager 3 einer Untersuchung unterzogen werden, bei der sowohl die axiale Lagerluft als auch der Schwingungszustand ermittelt werden sollen.

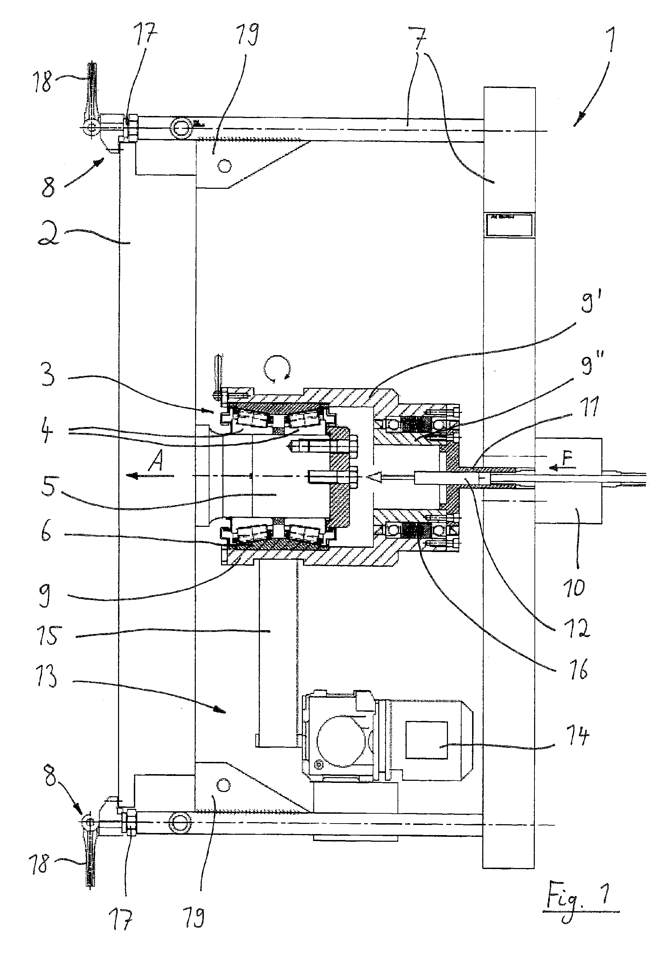

Hierfür ist eine Vorrichtung 1 vorgesehen, die einen Grundrahmen 7 aufweist. Dieser Grundrahmen kann mittels Befestigungsmitteln 8 am Rad 2 befestigt werden, wozu in Fig. 1 ersichtliche Spannschrauben 17 vorgesehen sind, die mit einem Handgriff 18 gedreht werden können, um so einen Anschlag 19 der Vorrichtung 1 gegenüber dem Rad 2 verspannen zu können.

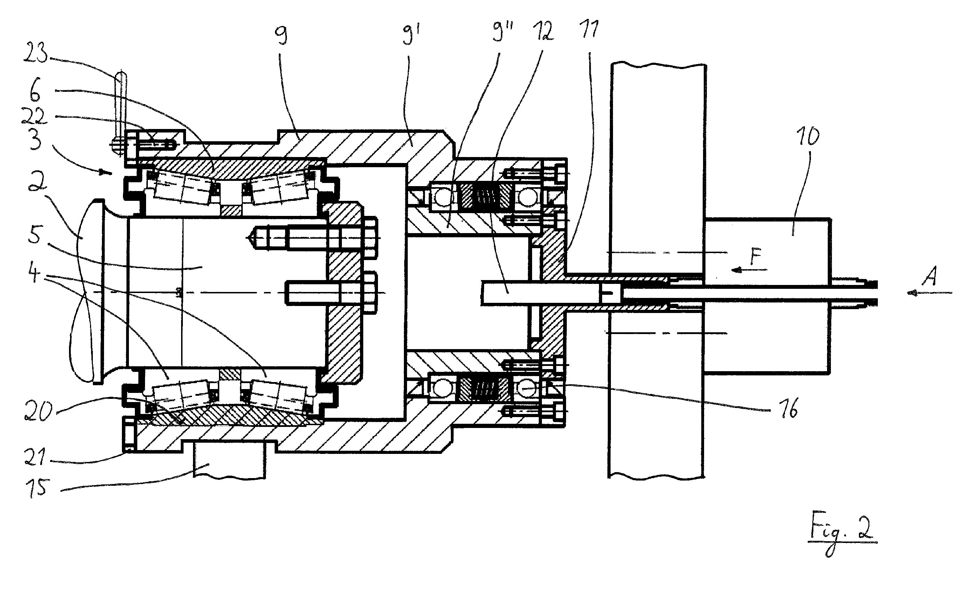

In der Regel wird zum Vermessen des Radlagers 3 das (nicht dargestellte) Gehäuse, das im Betrieb der Lageranordnung den Außenring 6 aufnimmt, demontiert sein. Dann kann ein glockenförmig ausgebildetes Halteelement 9 vorgesehen werden, das eine Innenbohrung 20 (s. Fig. 2) aufweist, die den Außenring 6 aufnehmen kann. Eine axiale Fixierung zwischen dem Halteelement 9 und dem Außenring 6 wird durch eine Klemme 21 möglich, die mit einer Spannschraube 22 mit Handgriff 23 leicht montierbar ist.

Das Halteelement 9 ist mit einem Aktuator 11 eines Krafterzeugungsmittels 10 verbunden. Das Krafterzeugungsmittel 10 selber ist am Grundrahmen 7 montiert, so dass der Aktuator 11 eine in Richtung der Achse A wirkende Kraft F auf das Halteelement 9 ausüben kann. Genauer gesagt, kann der Aktuator 11 abwechselnd eine Kraft in beide Achsrichtungen der Achse A erzeugen, so dass die relative axiale Verschiebung zwischen Innenringen 4 und Außenring 6 und so die Lagerluft gemessen werden kann.

Wünschenswert bzw. notwendig ist es, dass bei der Messung das Radlager 3 dreht. Um dies zu bewerkstelligen, ist ein Antriebsmittel 13 in der Vorrichtung 1 vorhanden. Es handelt sich dabei um einen Elektromotor 14, der über einen Riemen 15 das Halteelement 9 drehantreibt.

Damit dies bei weitgehend stationärer Einleitung der axialen Kraft vom Krafterzeugungsmittel 10 in das Halteelement 9 erfolgen kann, ist das Halteelement 9 zweiteilig ausgeführt. Es hat einen ersten Teil 9', der den Außenring 6 einfasst und bei Antrieb durch den Elektromotor 14 rotiert, und einen zweiten Teil 9", der nicht rotiert. Die deshalb nötige relative Drehbewegung zwischen den Teilen 9' und 9'' wird durch eine Lageranordnung 16 ermöglicht. Diese Lageranordnung besteht vorliegend aus einer zweireihigen federvorgespannten Schrägkugellageranordnung.

Konzentrisch durch die Krafterzeugungsmittel 10 hindurch tritt ein Messmittel 12 in Form eines Stifts, der sich axial an den Wellenabschnitt 5 anlegen kann. Demgemäß erfasst das Messmittel 12 die relative axiale Verschiebung zwischen Innenringen 4 und Außenring 6 und so die Lagerluft.

Die Untersuchung bzw. Messung des Radlagers 3 erfolgt wie folgt:

Mit dem Grundrahmen 7 wird das Krafterzeugungsmittel 10 (Belastungsvorrichtung) am Rad 2 (Eisenbahn-Radsatzreifen) befestigt. Das Halteelement 9 in Form einer Gehäuseglocke wird über den Außenring 6 geschoben und fixiert.

Bei einem montierten Lagergehäuse kann auch ein Adapter vorgesehen werden, mit dem das Gehäuse für die Messung zu einem praktisch rotationssymmetrischen Bauteil komplementiert wird.

Die Gehäuseglocke 9 ist drehbar gelagert, um das Radlager 3 während der Messung rotieren lassen zu können. Die Einleitung der Drehbewegung erfolgt über den am Grundrahmen 7 fixierten Elektromotor 14, über ein Treibelement 15 (Antriebselement), welches Motor 14 und Gehäuseglocke 9 verbindet.

Ein Wegaufnehmer 12 misst den axialen Verschiebeweg zwischen Gehäuseglocke 9 und Wellenabschnitt 5 (Achsstummel).

Ein Überwachungsgerät (Condition-Monitoring-System) wird am Radsatz angebracht und erlaubt die Schwingungsanalyse der beiden Lagerreihen des Radlagers 3.

### Bezugszeichenliste

| | |
|---|---|
| 1 | Vorrichtung zur Messung |
| 2 | Rad |
| 3 | Radlager |
| 4 | Innenring |
| 5 | Wellenabschnitt |
| 6 | Außenring |
| 7 | Grundrahmen |
| 8 | Befestigungsmittel |
| 9 | Haltelement (Gehäuseglocke) |
| 9' | erster Teil des Halteelements |
| 9'' | zweiter Teil des Halteelements |
| 10 | Krafterzeugungsmittel |
| 11 | Aktuator |
| 12 | Messmittel |
| 13 | Antriebsmittel |
| 14 | Elektromotor |
| 15 | Treibelement (Riemen) |
| 16 | Lageranordnung |
| 17 | Spannschraube |
| 18 | Handgriff |
| 19 | Anschlag |
| 20 | Innenbohrung |
| 21 | Klemme |
| 22 | Spannschraube |
| 23 | Handgriff |
| | |
| A | Achse |
| F | Andruckkraft |

## Patentansprüche

1. Vorrichtung (1) zur Messung der axialen Lagerluft eines mit einem Rad (2) verbundenen Radlagers (3), wobei das Radlager (3) mindestens einen Innenring (4) aufweist, der mit einem Wellenabschnitt (5) des Rades (2) verbunden ist, wobei das Radlager (3) mindestens einen Außenring (6) aufweist und wobei der Innenring (4) und der Außenring (6) konzentrisch zu einer Achse (A) angeordnet sind, wobei die Vorrichtung umfasst:
- einen Grundrahmen (7),
- Befestigungsmittel (8) zur Fixierung des Grundrahmens (7) an dem Rad (2),
- ein Haltelement (9), das ausgebildet ist, direkt oder indirekt am Außenring (6) befestigt zu werden,
- Krafterzeugungsmittel (10) mit einem Aktuator (11), die an dem Grundrahmen (7) angeordnet und ausgebildet sind, den Aktuator (10) mit einer Andruckkraft (F) in Richtung der Achse (A) auf das Haltemittel (9) wirken zu lassen, und
- Messmittel (12), die direkt oder indirekt am Grundrahmen (7) angeordnet und ausgebildet sind, eine Verschiebung des Halteelements (9) relativ zum Grundrahmen (7) in Richtung der Achse (A) zu messen.

2. Vorrichtung nach Anspruch 1, **dadurch gekennzeichnet, dass** das Halteelement (9) glockenförmig ausgebildet ist, um den Außenring (6) des Radlagers (3) an seinem Außenumfang einzufassen.

3. Vorrichtung nach Anspruch 1 oder 2, **dadurch gekennzeichnet, dass** am Grundrahmen (7) weiterhin Antriebsmittel (13) angeordnet sind, mit denen das Halteelement (9) um die Achse (A) drehangetrieben werden kann.

4. Vorrichtung nach Anspruch 3, **dadurch gekennzeichnet, dass** die Antriebsmittel (13) einen Elektromotor (14) umfassen, der über ein Treibelement (15) mit dem Halteelement (9) in Verbindung steht.

5. Vorrichtung nach Anspruch 4, **dadurch gekennzeichnet, dass** das Treibelement (15) ein Riemen, insbesondere ein Flachriemen oder ein Keilriemen, oder eine Kette ist.

6. Vorrichtung nach einem der Ansprüche 1 bis 5, **dadurch gekennzeichnet, dass** das Haltelement (9) einen ersten Teil (9') aufweist, der drehfest mit dem Außenring (6) verbindbar ist, und einen zweiten Teil (9'') aufweist, der mit dem Krafterzeugungsmittel (10) verbindbar ist, wobei beide Teile (9', 9") über eine Lageranordnung (16) relativ zueinander um die Achse (A) drehbar angeordnet sind.

7. Vorrichtung nach einem der Ansprüche 1 bis 6, **dadurch gekennzeichnet, dass** die Krafterzeugungsmittel (10) weitgehend rotationssymmetrisch zur Achse (A) ausgebildet sind.

8. Vorrichtung nach Anspruch 7, **dadurch gekennzeichnet, dass** zumindest ein Teil der Messmittel (12) konzentrisch zu den Krafterzeugungsmitteln (10) angeordnet sind.

9. Vorrichtung nach Anspruch 8, **dadurch gekennzeichnet, dass** der konzentrisch zu den Krafterzeugungsmitteln (10) angeordnete Teil des Messmittels (12) ein Stift ist.

10. Vorrichtung nach einem der Ansprüche 1 bis 9, **dadurch gekennzeichnet, dass** am Grundrahmen (7) weiterhin Sensormittel angeordnet sind, mit denen vom Radlager (3) erzeugte Schwingungen detektiert werden können.
